# EUROPEAN PATENT APPLICATION

(11) **EP 2 677 743 A1**
(43) Date of publication of application: **25.12.2013**
(21) Application number: 12172549.3
(22) Date of filing: 19.06.2012
(51) Int. Cl.: H04N 7/15, G10L 17/00

(54) **Method and apparatus for identifying an active participant in a conferencing event**

(71) Applicant: BlackBerry Limited, Waterloo, ON N2K 0A7 (CA)
(72) Inventor: Bajaj, Aditya, Mississauga, Ontario (CA); Popa, Raluca Alina, Waterloo, Ontario N2L 3W8 (CA); Clemmer, Jeff R., Waterloo, Ontario N2L 5Z5 (CA)
(74) Representative: Moore, Barry

(57) **Abstract**

Presented are systems and methods for identifying an active participant in a conferencing event. A sound input is received from the active participant in the conferencing event at a microphone associated with an electronic device. The sound input is compared to a pre-defined voice of a particular participant, and when a match is found, the active participant is identified to be that particular participant. A message is then sent to a server indicating that the active participant has been identified. The server then provides the identity information of the active participant in the conferencing event.

## Description

### FIELD

The present disclosure relates to conferencing events, and in particular, to identifying an active participant in a conferencing event by an electronic device.

### BACKGROUND

In today's interconnected world, users utilize conferencing technology to collaborate with others who are not in the same geographical location. Examples of conferencing systems include video conferencing and teleconferencing.

Electronic devices, including portable electronic devices, have gained widespread use and can provide a variety of functionalities including, for example, telephony, teleconferencing, video conferencing, messaging, web browsing, speech recognition, or personal information manager (PIM) functions such as a calendar application. Portable electronic devices, such as cellular telephones (mobile phones), smart telephones (smartphones), Personal Digital Assistants (PDAs), laptop computers, or tablet computers are increasingly being carried by conferencing participants while they in a conferencing event. Improved integration of the electronic devices during a conferencing event to leverage their functionalities is desirable

### BRIEF DESCRIPTION OF THE DRAWINGS

Reference will now be made to the accompanying drawings showing example embodiments of the present application, and in which:

**Figure 1** shows, in block diagram form, an example system utilizing a conferencing system;

**Figure 2** shows a block diagram illustrating an electronic device in accordance with an example embodiment;

**Figure 3** shows an example conferencing environment connected to an example conferencing system shown in block diagram form;

**Figure 4** is a block diagram depicting an example conference server in accordance with an example embodiment;

**Figure 5** is a flow chart illustrating a first example method performed by an electronic device for identifying an active participant in a conferencing event;

**Figure 6** is a flow chart illustrating a second example method performed by an electronic device for identifying an active participant in a conferencing event; and

**Figure 7** is a flow chart illustrating an example method performed by a server for providing identity information of an active participant in a conferencing.

### DESCRIPTION OF EXAMPLE EMBODIMENTS

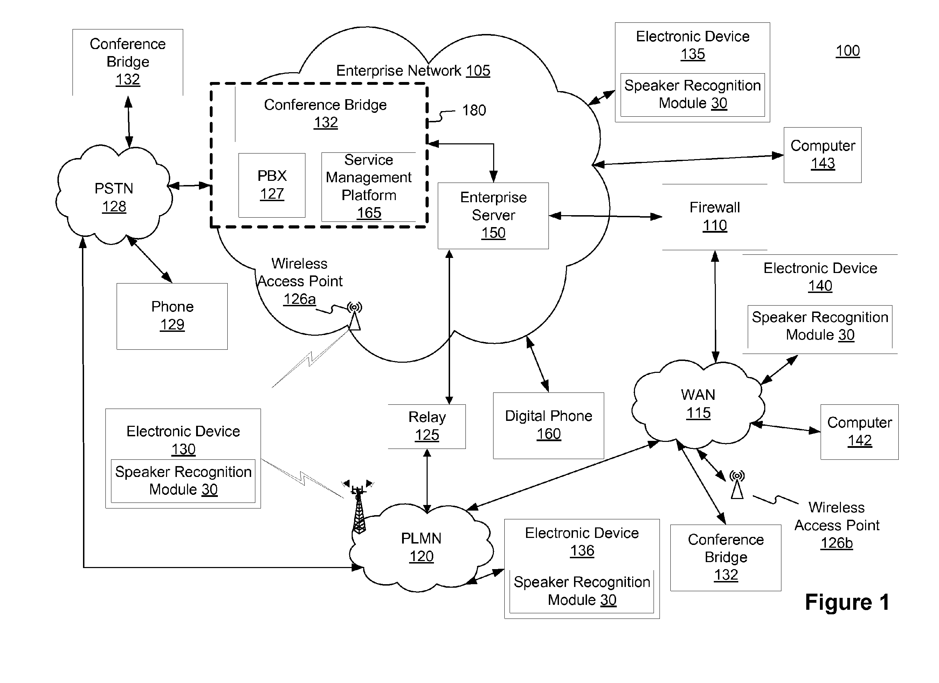

The example embodiments provided below describe an electronic device, computer readable medium, and method for identifying an active participant in a conferencing event. When a participant in a conferencing event speaks, a sound input is received from the active participant at a microphone associated with the electronic device. Characteristics of the sound input are compared to a pre-defined voice pattern of a particular participant, and after a match is found, the participant is identified to be that active participant. A message is then sent to a server, such as a service management platform (SMP) 165 shown in **Figure 1****,** indicating that the active participant has been identified. The identity information of the active participant is also sent to the server. Additionally the message to the server can contain a first time stamp indicating when the sound input associated with the active participant was first received, and a second time stamp indicating when the sound input terminated. The server can then provide the identity information of the active participant to other conferencing event participants.

The example embodiments provided below also describe a server, computer readable medium, and method for providing an indication of the identity information of the active participant in a conferencing event to other participants. The server establishes a connection with a plurality of electronic devices. Each electronic device is associated to a participant in a conferencing event. A message is then received from one of the plurality of electronic devices providing identity information of the participant when active. The server then provides the identity information of the active participant in the conferencing event to other participants, for example, by displaying the identity information on a display. In some embodiments, the server is equipped with speech-to-text capabilities, and is able to transcribe the conferencing event. The transcript is then annotated with annotations such as the identity information of the active participant provided from the plurality of electronic devices. Other annotations are added in some embodiments, such as a timestamp information indicating when each participant spoke.

The following description refers to the accompanying drawings. Wherever possible, the same reference numbers are used in the drawings and the following description to refer to the same or similar parts. While several example embodiments are described herein, modifications, adaptations, and other implementations are possible. For example, substitutions, additions, or modifications can be made to the components illustrated in the drawings, and the example methods described herein can be modified by substituting, reordering, or adding steps to the disclosed methods. Accordingly, the foregoing general description and the following detailed description are example and explanatory only and are not limiting.

In addition, numerous specific details are set forth in order to provide a thorough understanding of the example embodiments described herein. It will, however, be understood by those of ordinary skill in the art that the example embodiments described herein can be practiced without these specific details. Furthermore, well-known methods, procedures, and components have not been described in detail so as not to obscure the example embodiments described herein.

Reference is now made to **Figure 1****,** which shows, in block diagram form, an example system 100 utilizing a speaker recognition system for conference calls. System 100 includes an enterprise network 105, which in some embodiments includes a local area network (LAN). In some embodiments, enterprise network 105 can be an enterprise or business system. In some embodiments, enterprise network 105 includes more than one network and is located in multiple geographic areas.

Enterprise network 105 is coupled, often through a firewall 110, to a wide area network (WAN) 115, such as the Internet. Enterprise network 105 can also be coupled to a public switched telephone network (PSTN) 128 via direct inward dialing (DID) trunks or primary rate interface (PRI) trunks (not shown).

Enterprise network 105 can also communicate with a public land mobile network (PLMN) 120, which is also referred to as a wireless wide area network (WWAN) or, in some cases, a cellular network. The connection with PLMN 120 is via a relay 125.

In some embodiments, enterprise network 105 provides a wireless local area network (WLAN), not shown, featuring wireless access points, such as wireless access point 126a In some embodiments, other WLANs can exist outside enterprise network 105. For example, a WLAN coupled to WAN 115 can be accessed via wireless access point 126b. WAN 115 is coupled to one or more mobile devices, for example mobile device 140. Additionally, WAN 115 can be coupled to one or more desktop or laptop computers 142 (one shown in Figure 1).

System 100 can include a number of enterprise-associated electronic devices, for example, electronic devices 130, 135, 136, and 140. Electronic devices 130,135,136, and 140 can include devices equipped for cellular communication through PLMN 120, electronic devices equipped for Wi-Fi communications over one of the WLANs via wireless access points 126a or 126b, or dual-mode devices capable of both cellular and WLAN communications. Wireless access points 126a or 126b can be configured to WLANs that operate in accordance with one of the IEEE 802.11 specifications.

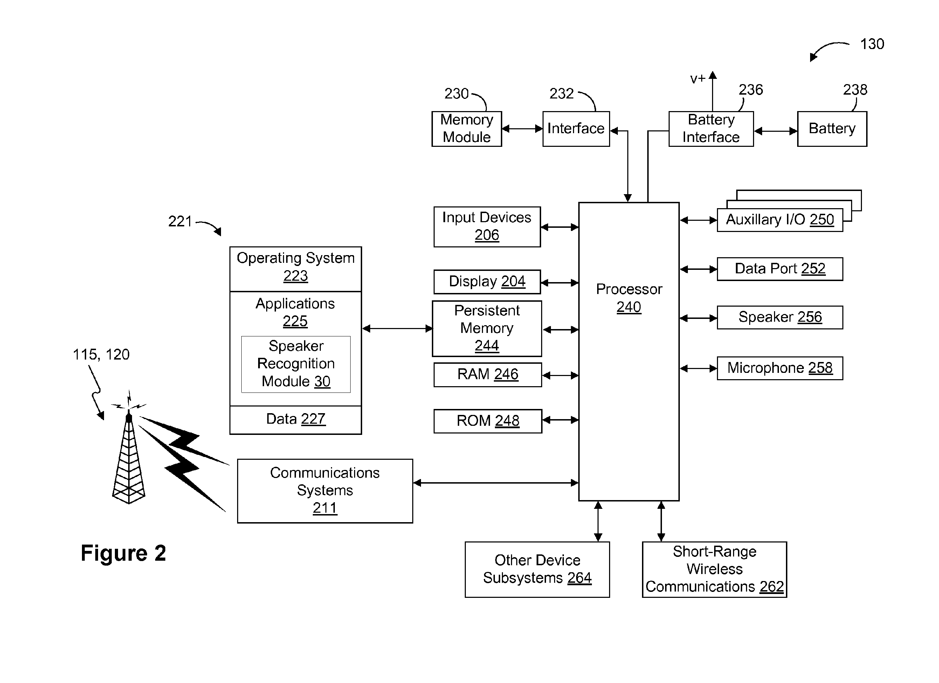

Electronic devices 130, 135, 136, and 140 can be, for example, cellular phones, smartphones, phones, digital phones, tablets, netbooks, and PDAs (personal digital assistants) enabled for wireless communication. In some embodiments, one of the electronic devices 130, 135, 136, and 140 is a mobile communication device, such as a cellular phone or a smartphone. Moreover, electronic devices 130, 135, 136, and 140 can communicate with other components using voice communications or data communications (such as accessing content from a website). Electronic devices 130, 135, 136, and 140 include devices equipped for cellular communication through PLMN 120, devices equipped for Wi-Fi communications via wireless access points 126a or 126b, or dual-mode devices capable of both cellular and WLAN communications. Electronic devices 130, 135, 136, and 140 are described in more detail below in **Figure 2****.**

Electronic devices 130, 135, 136, and 140 also include one or more radio transceivers and associated processing hardware and software to enable wireless communications with PLMN 120, and/or one of the WLANs via wireless access points 126a or 126b. In various embodiments, PLMN 120 and electronic devices 130, 135, 136, and 140 are configured to operate in compliance with any one or more of a number of wireless protocols, including GSM, GPRS, CDMA, EDGE, UMTS, EvDO, HSPA, LTE, LTE Advanced, WiMAX, 3GPP, or a variety of others. It will be appreciated that electronic devices 130, 135, 136, and 140 can roam within PLMN 120 and across PLMNs, in known manner, as their user moves. In some instances, dual-mode electronic devices 130, 135, 136, and 140 and/or enterprise network 105 are configured to facilitate roaming between PLMN 120 and a wireless access points 126a or 126b, and are thus capable of seamlessly transferring sessions (such as voice calls) from a connection with the cellular interface of dual-mode device 130, 135, 136, and 140 to a WLAN interface of the dual-mode device, and vice versa. In other embodiments, one of the electronic devices 130,135,136, and 140 includes a transceiver for wired communication, and associated processing hardware and software to enable wired communions with PLMN 120.

Enterprise network 105 typically includes a number of networked servers, computers, and other devices. For example, enterprise network 105 can connect one or more computers 142. The connection can be wired or wireless in some embodiments. Enterprise network 105 can also connect to one or more digital telephone phones 160.

Relay 125 serves to route messages received over PLMN 120 from electronic devices 130, 135, 136, and 140 to corresponding enterprise network 105. Relay 125 also pushes messages from enterprise network 105 to electronic devices 130, 135, 136, and 140 via PLMN 120.

Enterprise network 105 also includes an enterprise server 150. Together with relay 125, enterprise server 150 functions to redirect or relay incoming e-mail messages addressed to a user's e-mail address through enterprise network 105 to electronic devices 130, 135, 136, and 140 and to relay incoming e-mail messages composed and sent via electronic device 130 out to the intended recipients within WAN 115 or elsewhere. Enterprise server 150 and relay 125 together facilitate a "push" e-mail service for electronic devices 130, 135, 136, and 140, enabling the user to send and receive e-mail messages using electronic devices 130, 135, 136, and 140 as though the user were coupled to an e-mail client within enterprise network 105 using the user's enterprise-related e-mail address, for example on computer 143.

As is typical in many enterprises, enterprise network 105 includes a Private Branch eXchange (although in various embodiments the PBX can be a standard PBX or an IP-PBX, for simplicity the description below uses the term PBX to refer to both) 127 having a connection with PSTN 128 for routing incoming and outgoing voice calls for the enterprise. PBX 127 is coupled to PSTN 128 via DID trunks or PRI trunks, for example, PBX 127 can use ISDN signaling protocols for setting up and tearing down circuit-switched connections through PSTN 128 and related signaling and communications. In some embodiments, PBX 127 can be coupled to one or more conventional analog telephones 129. PBX 127 is also coupled to enterprise network 105 and, through it, to telephone terminal devices, such as digital telephone sets 160, softphones operating on computers 143, etc. Within the enterprise, each individual can have an associated extension number, sometimes referred to as a PNP (private numbering plan), or direct dial phone number. Calls outgoing from PBX 127 to PSTN 128 or incoming from PSTN 128 to PBX 127 are typically circuit-switched calls. Within the enterprise, for example, between PBX 127 and terminal devices, voice calls are often packet-switched calls, for example Voice-over-IP (VoIP) calls.

System 100 includes one or more conference bridges 132. The conference bridge 132 can be part of the enterprise network 105. Additionally, in some embodiments, the conference bridge 132 can be accessed via WAN 115 or PTSN 128.

Enterprise network 105 can further include a Service Management Platform (SMP) 165 for performing some aspects of messaging or session control, like call control and advanced call processing features. Service Management Platform (SMP) can have one or more processors and at least one memory for storing program instructions. The processor(s) can be a single or multiple microprocessors, field programmable gate arrays (FPGAs), or digital signal processors (DSPs) capable of executing particular sets of instructions. Computer-readable instructions can be stored on a tangible non-transitory computer-readable medium, such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory. Alternatively, the methods can be implemented in hardware components or combinations of hardware and software such as, for example, ASICs, special purpose computers, or general purpose computers. SMP 165 can be configured to receive a message indicating an active conferencing event participant's identity and to provide an indication of the active participant's identity to other conferencing event participants.

Collectively SMP 165, conference bridge 132, and PBX 127 are referred to as the enterprise communications platform 180. It will be appreciated that enterprise communications platform 180 and, in particular, SMP 165, is implemented on one or more servers having suitable communications interfaces for connecting to and communicating with PBX 127, conference bridge 132, and DID/PRI trunks. Although SMP 165 can be implemented on a stand-alone server, it will be appreciated that it can be implemented into an existing control agent/server as a logical software component.

Electronic devices 130, 135, 136, and 140, for example, are in communication with enterprise network 105 and have a speaker recognition module 30. Speaker recognition module 30 can include one or more processors (not shown), a memory (not shown). The processor(s) can be a single or multiple microprocessors, field programmable gate arrays (FPGAs), or digital signal processors (DSPs) capable of executing particular sets of instructions. Computer-readable instructions can be stored on a tangible non-transitory computer-readable medium, such as a flexible disk, a hard disk, a CD-ROM (compact disk-read only memory), and MO (magneto-optical), a DVD-ROM (digital versatile disk-read only memory), a DVD RAM (digital versatile disk-random access memory), or a semiconductor memory. Alternatively, the methods can be implemented in hardware components or combinations of hardware and software such as, for example, ASICs, special purpose computers, or general purpose computers. Speaker recognition module 30 can be implemented on electronic devices 130, 135, 136, and 140, a computer (for example, computer 142 or computer 143), a digital phone 160, distributed across a plurality of computers, or some combination thereof.

Reference is now made to **Figure 2** which illustrates in detail mobile device 130 in which example embodiments can be applied. Note that while **Figure 2** is described in reference to electronic device 130, in some embodiments it also applies to electronic devices 135, 136, and 140. In other embodiments, communication subsystem 211 facilitates wired communication, for example, for digital phone 160. Furthermore, battery interface 236 and battery 238 are considered optional if an alternate power source is provided, such as a DC power source.

In one embodiment, electronic device 130 is a two-way communication mobile device having data and voice communication capabilities, and the capability to communicate with other computer systems, for example, via the Internet. Depending on the functionality provided by electronic device 130, in various embodiments electronic device 130 can be a handheld device, a multiple-mode communication device configured for data and voice communication, a smartphone, a mobile telephone, a netbook, a gaming console, a tablet, or a PDA (personal digital assistant) enabled for wireless communication.

Electronic device 130 includes a housing (not shown) containing the components of electronic device 130. The internal components of electronic device 130 can, for example, be constructed on a printed circuit board (PCB). The description of electronic device 130 herein mentions a number of specific components and subsystems. Although these components and subsystems can be realized as discrete elements, the functions of the components and subsystems can also be realized by integrating, combining, or packaging one or more elements in any suitable fashion.

Electronic device 130 includes a controller comprising at least one processor 240 (such as a microprocessor), which controls the overall operation of electronic device 130. Processor 240 interacts with device subsystems such as a communication systems 211 for exchanging radio frequency signals with the wireless network (for example WAN 115 and/or PLMN 120) to perform communication functions. Processor 240 is coupled to and interacts with additional device subsystems including a display 204 such as a liquid crystal display (LCD) screen or any other appropriate display, input devices 206 such as a keyboard and control buttons, persistent memory 244, random access memory (RAM) 246, read only memory (ROM) 248, auxiliary input/output (I/O) subsystems 250, data port 252 such as a conventional serial data port or a Universal Serial Bus (USB) data port, speaker 256, microphone 258, short-range communication subsystem 262 (which can employ any appropriate wireless (for example, RF), optical, or other short range communications technology), and other device subsystems generally designated as 264. Some of the subsystems shown in **Figure 2** perform communication-related functions, whereas other subsystems can provide "resident" or on-device functions.

Display 204 can be realized as a touch-screen display in some embodiments. The touch-screen display can be constructed using a touch-sensitive input surface coupled to an electronic controller and which overlays the visible element of display 204. The touch-sensitive overlay and the electronic controller provide a touch-sensitive input device and processor 240 interacts with the touch-sensitive overlay via the electronic controller.

Microphone 258 is used to capture audio steams, such as during a phone call. Microphone 258 is designed to capture analog sound waves and to convert the analog sound waves to digital signals. In some embodiments, the digital signals are encoded by processor 240 and are stored on any of persistent memory 244 or RAM 246. In some embodiments, the digital signals are encoded by processor 240 and transmitted by communication systems 211.

Communication systems 211 includes one or more communication systems for communicating with wireless WAN 115 and wireless access points 126a and 126b within the wireless network. The particular design of communication systems 211 depends on the wireless network in which electronic device 130 is intended to operate. Electronic device 130 can send and receive communication signals over the wireless network after the required network registration or activation procedures have been completed.

Processor 240 operates under stored program control and executes software modules 221 stored in memory such as persistent memory 244 or ROM 248. Processor 240 can execute code means or instructions. ROM 248 can contain data, program instructions, or both. Persistent memory 244 can contain data, program instructions, or both. In some embodiments, persistent memory 244 is rewritable under control of processor 240, and can be realized using any appropriate persistent memory technology, including EEPROM, EAROM, FLASH, and the like. As illustrated in **Figure 2****,** software modules 221 can include operating system software 223. Additionally, software modules 221 can include software applications 225.

In some embodiments, persistent memory 244 stores user-profile information, including, one or more conference dial-in telephone numbers. Persistent memory 244 can additionally store identifiers related to particular conferences. Persistent memory 244 can also store information relating to various people, for example, name of a user, a user's identifier (user name, email address, or any other identifier), place of employment, work phone number, home address, etc. Persistent memory 244 can also store one or more speech audio files, one or more voice templates, or any combination thereof. The one or more voice templates can be used to provide voice recognition functionality to the speaker recognition module 30. Identity information of the user can also be associated with each speech audio file, and voice template. The identity information is also stored on persistent memory 244. The identity information can be provided in the form of a vCard file, or it could simply be a name in a string.

Software modules 221, such as speaker recognition module 30, or parts thereof can be temporarily loaded into volatile memory such as RAM 246. RAM 246 is used for storing runtime data variables and other types of data or information. In some embodiments, different assignment of functions to the types of memory could also be used. In some embodiments, software modules 221 can include a speaker recognition module 30.

Software applications 225 can further include a range of applications, including, for example, an application related to speaker recognition module 30, e-mail messaging application, address book, calendar application, notepad application, Internet browser application, voice communication (i.e., telephony) application, mapping application, or a media player application, or any combination thereof. Each of software applications 225 can include layout information defining the placement of particular fields and graphic elements (for example, text fields, input fields, icons, etc.) in the user interface (i.e., display 204) according to the application.

In some embodiments, auxiliary input/output (I/O) subsystems 250 comprise an external communication link or interface, for example, an Ethernet connection. In some embodiments, auxiliary I/O subsystems 250 can further comprise one or more input devices, including a pointing or navigational tool such as a clickable trackball or scroll wheel or thumbwheel, or one or more output devices, including a mechanical transducer such as a vibrator for providing vibratory notifications in response to various events on electronic device 130 (for example, receipt of an electronic message or incoming phone call), or for other purposes such as haptic feedback (touch feedback).

In some embodiments, electronic device 130 also includes one or more removable memory modules 230 (typically comprising FLASH memory) and one or more memory module interfaces 232. Among possible functions of removable memory module 230 is to store information used to identify or authenticate a user or the user's account to wireless network (for example WAN 115 and/or PLMN 120). For example, in conjunction with certain types ofwireless networks, including GSM and successor networks, removable memory module 230 is referred to as a Subscriber Identity Module (SIM). Memory module 230 is inserted in or coupled to memory module interface 232 of electronic device 130 in order to operate in conjunction with the wireless network. Additionally, in some embodiments, one or more memory modules 230 can contain one or more speech audio files, voice templates, voice pattern, or other associated user identity information that can be used by speaker recognition module 30 for voice recognition.

Electronic device 130 stores data 227 in persistent memory 244. In various embodiments, data 227 includes service data comprising information required by electronic device 130 to establish and maintain communication with the wireless network (for example WAN 115 and/or PLMN 120). Data 227 can also include, for example, scheduling and connection information for connecting to a scheduled call. Data 227 can include speech audio files, voice templates, and associated user identity information generated by the user of electronic device 130.

Electronic device 130 also includes a battery 238 which furnishes energy for operating electronic device 130. Battery 238 can be coupled to the electrical circuitry of electronic device 130 through a battery interface 236, which can manage such functions as charging battery 238 from an external power source (not shown) and the distribution of energy to various loads within or coupled to electronic device 130. Short-range communication subsystem 262 is an additional optional component that provides for communication between electronic device 130 and different systems or devices, which need not necessarily be similar devices. For example, short-range communication subsystem 262 can include an infrared device and associated circuits and components, or a wireless bus protocol compliant communication device such as a BLUETOOTH® communication module to provide for communication with similarly-enabled systems and devices.

A predetermined set of applications that control basic device operations, including data and possibly voice communication applications can be installed on electronic device 130 during or after manufacture. Additional applications and/or upgrades to operating system software 223 or software applications 225 can also be loaded onto electronic device 130 through the wireless network (for example WAN 115 and/or PLMN 120), auxiliary I/O subsystem 250, data port 252, short-range communication subsystem 262, or other suitable subsystem such as 264. The downloaded programs or code modules can be permanently installed, for example, written into the program memory (for example persistent memory 244), or written into and executed from RAM 246 for execution by processor 240 at runtime.

Electronic device 130 can provide three principal modes of communication: a data communication mode, a voice communication mode, and a video communication mode. In the data communication mode, a received data signal such as a text message, an e-mail message, Web page download, or an image file are processed by communication systems 211 and input to processor 240 for further processing. For example, a downloaded Web page can be further processed by a browser application, or an e-mail message can be processed by an e-mail message messaging application and output to display 204. A user of electronic device 130 can also compose data items, such as e-mail messages, for example, using the input devices in conjunction with display 204. These composed items can be transmitted through communication systems 211 over the wireless network (for example WAN 115 and/or PLMN 120). In the voice communication mode, electronic device 130 provides telephony functions and operates as a typical cellular phone. In the video communication mode, electronic device 130 provides video telephony functions and operates as a video teleconference term. In the video communication mode, electronic device 130 utilizes one or more cameras (not shown) to capture video of video teleconference.

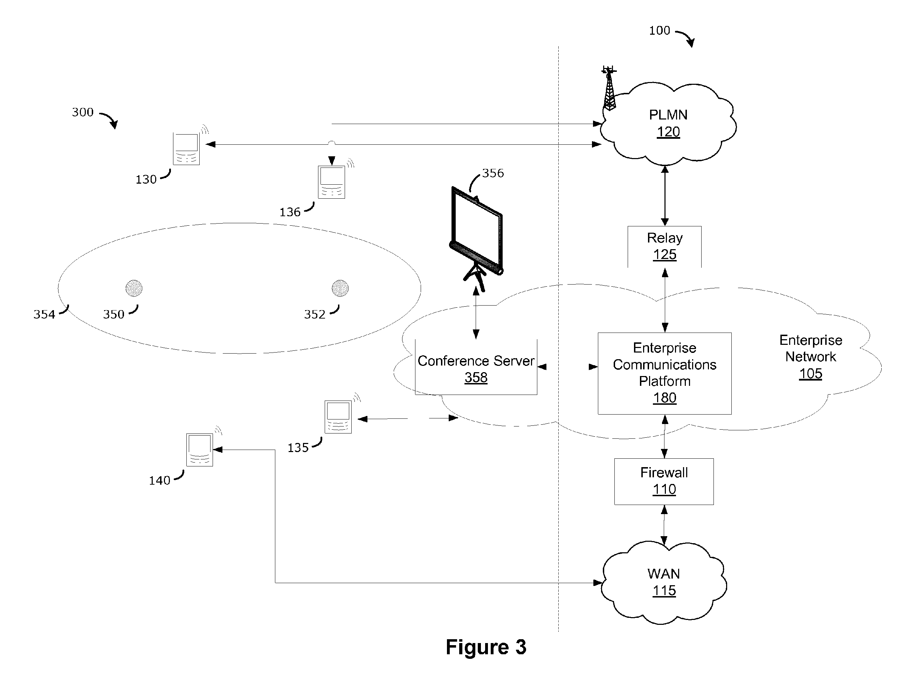

Reference is now made to **Figure 3****,** showing an example conferencing environment 300 connected to an example conferencing system 100. In this embodiment, the conferencing environment 300 is a room in an enterprise, having conference server 358 connected to the Enterprise Communications Platform 180. In other embodiments, the conferencing environment 300 can be external to an enterprise, and connects to the Enterprise Communication Platform 180 over WAN 115 through firewall 110. This can be the case if a conference is held between two companies, or if a conference is held between two remote locations of the same company. In other embodiments, the Enterprise Communications Platform 180 can be hosted by a third party that provides conferencing services.

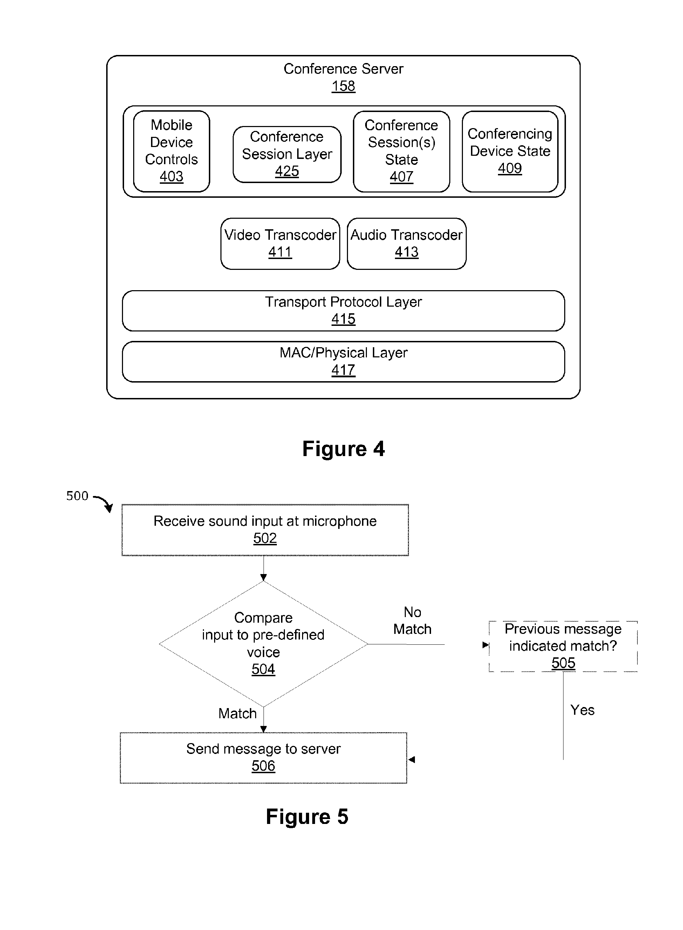

Conferencing environment 300 is fitted with conferencing equipment to connect conferencing event participants in conferencing environment 300 to other remote conferencing event participants. In this embodiment, a conference table 354 is shown, and is equipped with conferencing microphones 350, and 352. Conferencing microphones 350 and 352 are designed to capture high fidelity audio streams, and to send the audio stream to conference server 358. Also, speakers (not shown) are connected to the conference server 358 and are used to listen to audio streams from other remote conferencing event participants. In addition, the conferencing environment could also be fitted with a camera (not shown) for video conferencing, and connected to the conference server 358. Also connected to the conference server 358 is display 356, which is used to display data and video from conferencing event participants. Conference server 358 serves as a communications hub for conferencing event participants, and is described in detail in **Figure 4****.**

Each electronic device 130, 135, 136, and 140 is associated with a conferencing event participant in conferencing environment 300. In some embodiments each electronic device 130, 135, 136, and 140 can be associated with multiple users, and require a conferencing event participant to login to retrieve his or her personalized settings for the duration of conferencing event. Electronic devices 130, 135, 136, and 140 can be, for example, cellular phones, smartphones, digital phones, tablets, netbooks, and PDAs (personal digital assistants) enabled for wireless communication. Moreover, electronic devices 130, 135, 136, and 140 can communicate with other components using voice communications or data communications (such as accessing content from a website). Electronic devices 130, 135, 136, and 140 include devices equipped for cellular communication through PLMN 120, devices equipped for WAN communications via WAN 115, or dual-mode devices capable of both cellular and WAN communications. Electronic devices 130, 135, 136, and 140 are therefore able to connect to Enterprise Communications Platform 180 for the duration of conferencing event. Electronic devices 130,135,136, and 140 are described in more detail above in **Figure 2****.**

Reference is now made to **Figure 4****,** which is a block diagram of an example organization of conference server 358. Conference server 358 includes one or more MAC/Physical layers 417 for interfacing with a variety of networks, and can for example include fiber and copper based Ethernet connections to a switch, which in turn communicates with a router. A transport protocol layer 415 manages transport layer activities for conference sessions and can implement a TCP protocol, for example. Conference server 358 can implement a video transcoder 411 and an audio transcoder 413. Video transcoder 411 can implement functions including changing a resolution of a plurality of images and compositing images. For example, video transcoder 411 can receive a plurality of high definition video streams over MAC/Physical layer 417, convert those streams into lower resolution streams, and composite the lower resolution streams into a new video stream where the lower resolution streams each occupy a screen portion of the new video stream. Similarly, audio transcoder 413 can change codecs used in encoding audio. For example, codecs can be changed between any of International Telecommunications Union (ITU) Recommendations G.721, G.722, G.729, and so on.

Conference server 358 is able to receive an audio stream from conferencing microphones 350 and 352 **(****Figure 3****)** and to encode the audio stream into a digital format to be transmitted over MAC/Physical layer 417. Similarly, conference server 358 is able receive an audio stream over MAC/Physical layer 417 and playback the audio stream over one or more speakers (not shown).

In embodiments where video conferencing is enabled, conference server 358 is able to receive a video stream from a conferencing camera (not shown) and encode the video steam into a digital format to be transmitted over MAC/Physical layer 417. Similarly, conference server is able to receive a video stream over MAC/Physical layer 417 and playback the video stream on a display, such as display 356 **(****Figure 3****).** In some embodiments, the conference server 358 can receive the video stream from an electronic device 130, 135, 136, or 140.

A variety of conference session state and other information can be used in controller activities conducted by video transcoder 411 and audio transcoder 413. For example, a conference session layer 425 can manage conference session state 407 for conference sessions in which a conferencing device uses server 358 as a proxy to another conferencing device. Conference server 358 can also maintain a store of information about devices that have used and/or are using server 358 for conferencing, as represented by conferencing device state 409, which can include more permanent data such as device capabilities, user preferences, network capabilities and so on.

Reference is now made to **Figure 5****,** showing a flow chart of an example method 500 for identifying an active participant in a conferencing event. Method 500 is performed by an electronic device associated with a participant in a conferencing event, such as electronic devices 130, 135, 136, and 140. The electronic device can be, for example, cellular phones, smartphones, digital phones, tablets, netbooks, and PDAs (personal digital assistants) enabled for wireless communication. The electronic device can, for example, contain data (e.g., data 227) that includes speech audio files, voice templates, and associated identity information generated by a participant in the conferencing event. In some embodiments, a single electronic device is associated with each participant in the conferencing event in each conferencing environment (e.g., conferencing environment 300).

Method 500 can either be enabled automatically by the electronic device, or manually by the participant in the conferencing event. In embodiments where the method 500 is enabled automatically, the electronic device can rely on appointments in the calendar application to determine when the method 500 should be activated. For example, a calendar appointment with conferencing event details provided can be stored in a persistent memory (e.g., persistent memory 244). The time and date of this appointment can serve as a trigger to start method 500. In other embodiments, where the method 500 is enabled manually by the participant in the conferencing event, a menu command in the user interface of the device can serve as a trigger to start method 500.

Method 500 can also be associated with other applications, where a server component could benefit from receiving identity information of a user, for example, to provide services that are specifically tailored to the user. Examples of this include voice enabled search, where a server component receives a query and returns some information regarding that query. By knowing the identity of the speaker, the server can tailor the information to the speaker by providing more personalization.

After method 500 starts, at step 502, the electronic device receives sound input at a microphone (e.g., microphone 258) associated with the electronic device. The received sound input can be the voice of an active participant in the conferencing event. In some embodiments, the microphone is disabled until it is triggered by an application corresponding to method 500 (e.g., application 225). In these embodiments, the microphone is enabled prior to receiving the sound input. The microphone senses any audio that is within its range.

After the sound input has been received, at step 504, a speaker recognition module (e.g., speaker recognition module 30) determines whether a match occurs by comparing the characteristics of the received sound input with a pre-defined voice associated with a participant of the conferencing event. The pre-defined voice associated with the participant is based on speech data, such as a speech audio file or a voice template, that has been previously recorded. The speech data can be stored as data (e.g., data 227) on a persistent memory (e.g., persistent memory 244) of the electronic device. To record the speech data, the participant in the conferencing event speaks to the electronic device, and the microphone receives this input until the device has an adequate voice sample to identify the participant at a later time. In some embodiments, the participant in the conferencing event can record the speech data using a second electronic device, and then send the speech data to the electronic device that is programmed to run method 500 via a known network. Each electronic device can store speech data for different participants in the persistent memory.

In some embodiments, at step 504, the speaker recognition module compares characteristics of the received sound input to a pre-defined voice associated with only one participant of the conferencing event. Processing for a single participant could allow for quicker and more accurate speaker recognition, as the speaker recognition module only attempts to recognize one voice. When method 500 is provided in real-time, as is expected in a conferencing environment, the speed of speaker recognition becomes more important; as time delays are not acceptable. Also, an advantage of running method 500 on the electronic device is that each participant in the conferencing event can have their own corresponding electronic device. That way, each electronic device can run method 500, and would only compare the received sound input to the pre-defined voice of the participant possessing that electronic device. Such a setup could help lead to improved accuracy.

In a real-time system, the sound input can be buffered in a buffer, such as RAM 246, until there is enough input to perform the comparison operation of step 504 by the speaker recognition module. A threshold can be identified as to how much input is required, for example, 20ms of sound input, or 100ms of sound input. This threshold can be varied dynamically in some embodiments, and can depend on variables such as: the comparison algorithm used; or the noise conditions; or the amplitude of the received sound input. After sufficient input is stored in the buffer, the method 500 can proceed.

At step 504, the speaker recognition module can determine whether a match occurs based on a comparison between the received sound input and the pre-defined voice; i.e. whether the sound input received at step 502 is the voice of the same person as the pre-defined voice. If so, the electronic device retrieves the identity information of the participant in the conferencing event stored in the persistent memory 244 associated with then pre-defined voice.

At step 506, the identity information of the participant in the conferencing event is then packaged into a message and sent to a server, such as service management platform (SMP) 165. In some embodiments, the message can contain only a unique ID that references the participant. This identity information can then be sent from the server to a conference server, such as conference server 358 in conferencing environment 300, and other conference servers that are connected to the conferencing event. The one or more conference servers can then display this information on a display, such as display 356. This identity information can also be sent to one or more electronic devices associated with the conferencing environment. Other electronic devices connected to the conferencing event, such as digital phone 160, and phone 129 can also receive this information. While some devices may not have display capabilities, such as digital phone 160 and phone 129, the identity information can be provided to these devices by adding the identity information to the conference audio stream using text-to-speech software on the server. The server can also send the identity information to conferencing software running on computers, such as computers 142 and 143.

Providing this identity information to conferencing event participants allows the participants to identify the active participant who is currently speaking. This is advantageous as it is sometimes difficult to identify the active participant in a conferencing event. This is particularly true when the conference has many participants.

In some embodiments, after sending a first message indicating that a match has been found to the server (e.g., SMP 165) at step 506, method 500 can return to step 502 and receive more sound input. If a match is again identified at step 504, then step 506 can be skipped, and no second message is sent to the server. Sending a second message to the server could be considered as being redundant at this point, as the identity of the participant is the same as the identity presented to participants in the conferencing event.

At step 504, the speaker recognition module can determine that the characteristics of the received sound input from step 502 does not match the pre-defined voice; i.e. the sound input received at step 502 is not the voice of the same person as the pre-defined voice. This implies that a second participant in the conferencing event is speaking. A second electronic device, such as electronic devices 130, 135, 136, and 140, can be associated with the second participant in the conferencing event. If method 500 is running on the second electronic device, then the second electronic device can send to the server a message indicating the identity of the second participant in the conferencing event. The server can then send the identity information of the second participant to the conference server and other conferencing devices.

If, however, there is no electronic device associated with the second participant, the identity information is not updated at the conference server. In an attempt to avoid such a scenario, an optional step 505 can be performed. At step 505, it is determined whether a previous message that was sent to the server indicated that a match was found. If a match was found, at step 506, a new message is sent to the server indicating the identity information of the participant in the conferencing event associated with the device running method 500, and further indicating that no match had been detected from step 504. When a match is not found at step 504, the identity information of the conferencing event participant is no longer presented to participants in the conferencing event. This serves to indicate to participants in conferencing event that the identity of the active participant in the conferencing event is not known. Optionally, a message indicating that the identity is not known can be presented to the participants in the conferencing event.

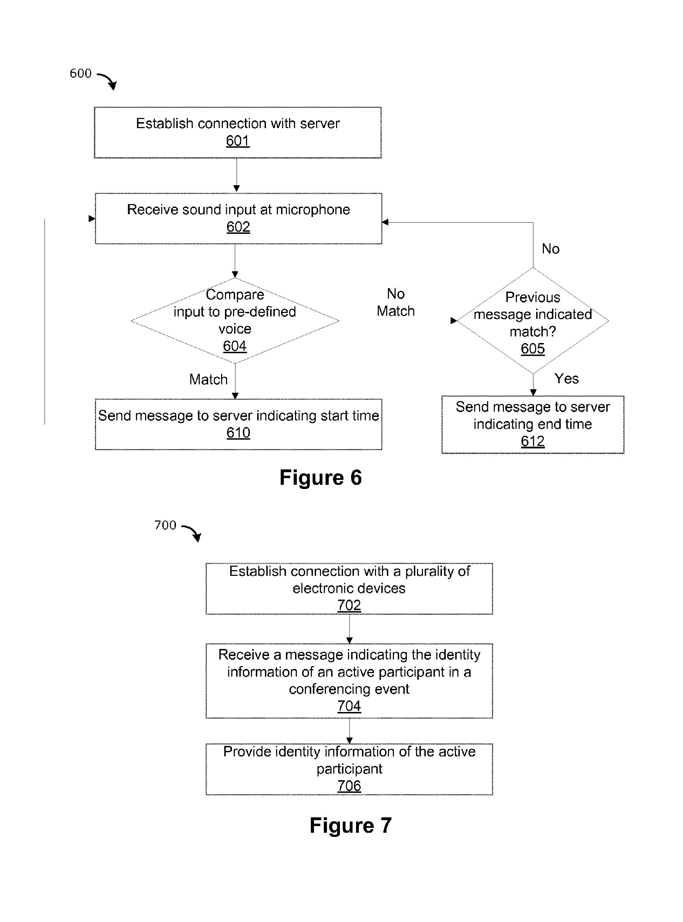

Reference is now made to **Figure 6****,** showing a flow chart of an example method 600 for identifying an active participant in a conferencing event. Method 600 is performed by an electronic device associated with a participant in the conferencing event, such as electronic devices 130, 135, 136, and 140. The electronic device can, for example, contain data (e.g., data 227) that includes speech audio files, voice templates, and associated identity information generated by a participant in the conferencing event. In some embodiments, a single electronic device is associated with each participant in the conferencing event in each conferencing environment (e.g., conferencing environment 300).

Method 600 is enabled similarly to method 500, as described above. At step 601, the electronic device running method 600 establishes a connection with a server, such as SMP 165. In establishing a connection with the server at step 601, a handshaking protocol is required in some embodiments, where the electronic device and the server exchange messages to negotiate and set the parameters required for the communication channel. In some embodiments, the handshaking protocol involves exchanging messages relating to the identity information associated with the speech audio files or voice templates that the speaker recognition module uses in the comparison step 604. The speech audio files or voice templates are associated with a participant in a conferencing event. This exchange of information allows the electronic device to send smaller subsequent messages; as the identity information of the participant is no longer required in future messages. The server can identify messages coming from each electronic device by the unique device ID associated with the electronic device, for example by a unique hardware ID, such as the (Media Access Control) MAC address. The connection can be established partially over a wireless network, and partially over a wired network.

After establishing a connection with server, at step 602, the electronic device receives sound input at a microphone (e.g., microphone 258) associated with the electronic device. The received sound input can be the voice of an active participant in the conferencing event. In some embodiments, the microphone is disabled until it is triggered by an application corresponding to method 500 (e.g., application 225). In these embodiments, the microphone is enabled prior to receiving the sound input. The microphone senses any audio that is within its range.

After the sound input has been received, at step 604, a speaker recognition module (e.g., speaker recognition modules 30) determines whether there is a match by comparing the characteristics of the received sound input with the pre-defined sound; i.e. the sound input received at step 602 is the voice of the same person as the pre-defined voice. The pre-defined voice associated with the participant has been stored as speech data, such as a speech audio file or a voice template, that has been previously recorded. The speech data can be stored as data (e.g., data 227) on a persistent memory (e.g., persistent memory 244) of the electronic device.

The electronic device can also identify the time at which the matching sound input is received. When method 600 is provided in real-time, this time corresponds to the time the participant in the conferencing event started speaking. If a match occurs, at step 610, the identified time information is then packaged into a message and sent to a server. If handshaking protocol messages were exchanged between the electronic device that is running method 600 and the server, the server is then able to deduce the identity information of the active participant in the conferencing event based on the unique ID associated with the electronic device that is running method 600. In other embodiments, this identity information is also encapsulated in the message with the identified time information. The server is then able to provide the identity information of the active participant in the conferencing event to other participants.

After sending a first message to the server at step 610, method 600 returns to step 602 and receives more sound input. If the electronic device determines that a match has occurred again at step 604, then step 610 can be skipped, and no second message is sent to the server. Sending a second message to the server could be considered as being redundant at this point, as the identity of the participant is the same as the identity presented to other participants in the conferencing event, and the start time has not changed.

At step 604, the speaker recognition module can determine that the received sound input from step 602 does not match the pre-defined voice; i.e. the sound input received at step 602 is not the voice of the same person as the pre-defined voice. This implies that the participant in the conferencing event associated with the pre-defined voice is not speaking. At step 605, it is determined whether the message that was previously sent to the server indicated that a match was successful. If yes, then that implies that the participant in the conferencing event associated with the pre-defined voice was speaking previously, and is no longer the speaker at the time the corresponding sound input is received at step 602. The time of the corresponding sound input indicates the end time of the speech. At step 612, the end time information of the participant in the conferencing event is then packaged into a message and sent to a server.

Method 600 can therefore provide to the server identity information of the participant in the conferencing event associated with the pre-defined voice, a start time indicating when this particular participant started speaking, and an end time indicating when this particular participant stopped speaking. This information can be compiled into a database on the server, stored in memory associated with the server, and used at a later time. For example, if the conferencing event is recorded and stored, this information can be useful during a re-play of the conferencing event. In some embodiments, the server can be equipped with speech-to-text software, and is thus able to transcribe the audio stream of the conferencing event. The transcribed text can then be cross-referenced with the timestamp information, and be annotated with participant's identity information. In some embodiments, multiple sections of the transcribed text are generated, where each section corresponds to a different participant in the conferencing event. Each section is then annotated with the identity information of the corresponding conferencing event participant.

Reference is now made to **Figure 7****,** showing a flow chart of an example method 700 for providing identity information of an active participant in a conferencing event. Method 700 can be performed by a server, such as SMP 165. Method 700 allows the server to receive information regarding an active participant from electronic devices that run example method 500 or example method 600, such as electronic devices 130, 135, 136, and 140. In some embodiments, a single electronic device is associated with each participant in the conferencing event.

At step 702, the server running method 700 establishes a connection with at least one electronic device running example methods 500 or 600. In some embodiments, a handshaking protocol can be used for establishing a connection with an electronic device. When the handshaking protocol is used, electronic device and the server exchange messages to negotiate and set the parameters required for the communication channel. In some embodiments, the handshaking protocol involves sending messages containing the identity information associated with the user of each electronic device.

A message is then received from the electronic device at step 704. The message can contain the identity information of a participant in the conference event, or this can be inferred from a unique ID associated with the electronic device. Also, in some embodiments, the message can contain time stamp information. Messages can be received from multiple electronic devices, such as electronic devices 130, 135, 136, and 140. For example, electronic device 130 can send a message with a start time indicating that the participant in the conferencing event associated with device 130 is now speaking. At a later time, electronic device 135 can send a message with a start time indicating that the participant associated with device 135 is now speaking, and device 130 can send a second message indicating that the participant associated with device 130 is no longer speaking. Using this information, the server is able to determine which conferencing event participant is actively speaking. In some embodiments, the server can receive a message with a compilation of a plurality of messages indicating a plurality of start and end times.

The identity information of the active participant in the conferencing event is then provided by the server to participants in the conferencing event at step 706. For example, the identity information can then be sent from the server to a conference server (such as conference server 358 in conferencing environment 300) and other conference servers that are connected to the conferencing event. The one or more conference servers can then display this information on a display, such as display 356. This identity information can also be sent to the one or more electronic devices. Other electronic devices connected to the conferencing event, such as digital phone 160, and phone 129 can also receive this information. While some devices may not have display capabilities, such as digital phone 160 and phone 129, the identity information can be provided to these devices by adding the identity information to the conference audio stream using text-to-speech software on the server. The server can also send the identity information to conferencing software running on computers 142 and 143.

Aspects described above can be implemented as computer executable code modules that can be stored on computer readable media, read by one or more processors, and executed thereon. In addition, separate boxes or illustrated separation of functional elements of illustrated systems does not necessarily require physical separation of such functions, as communications between such elements can occur by way of messaging, function calls, shared memory space, and so on, without any such physical separation. More generally, a person of ordinary skill would be able to adapt these disclosures to implementations of any of a variety of communication devices. Similarly, a person of ordinary skill would be able to use these disclosures to produce implementations and embodiments on different physical platforms or form factors without deviating from the scope of the claims and their equivalents.

## Claims

1. A method implemented by a processor (240) of an electronic device (130, 135, 136, 140) for identifying an active participant in a conferencing event, the method comprising:
receiving a sound input from the participant at a microphone (258) associated with the electronic device (130, 135, 136, 140);
identifying the participant by comparing the sound input to a pre-defined voice; and
sending a message to a server (165) indicating that the participant has been identified.

2. The method of claim 1, wherein the pre-defined voice corresponds to only one known participant in the conferencing event.

3. The method of claim 2, wherein the identity information of the participant in the conferencing event is accessible to the electronic device.

4. The method of claim 3, wherein the message contains information associated with the participant's identity.

5. The method of any preceding claim, wherein the message contains a first timestamp indicating a start-time of receiving the sound input.

6. The method of claim 5, wherein the message contains a second timestamp indicating an end-time of receiving the sound input.

7. The method of any preceding claim, wherein the server (165) manages a conference call.

8. The method of any preceding claim, further comprising establishing a connection with the server (165) over a communication link and sending the message in real-time.

9. An electronic device (130, 135, 136, 140), comprising:
a processor (240);
a microphone (258) coupled to the processor (240);
a communication subsystem (211) coupled to the processor (240); and
a memory (244) coupled to the processor (240), the memory (244) storing instructions executable by the processor (240), the instructions being adapted to carry out the method as claimed in any of claims 1 to 8.

10. A computer readable medium having executable code stored thereon that, when executed by a processer (240) of an electronic device (130, 135, 136, 140), causes the device (130, 135, 136, 140) to carry out the method as claimed in any of claims 1 to 8.

11. A method implemented by a processor of a server (165), the method comprising:
establishing a connection with a plurality of electronic devices (130, 135, 136, 140), wherein each electronic device (130, 135, 136, 140) is associated with a participant in a conferencing event;
receiving a message from one of the plurality of electronic devices (130, 135, 136, 140) providing identity information of an active participant in the conferencing event; and
providing an indication of the identity information of the active participant in the conferencing event.

12. The method of claim 11, further comprising receiving compilation a plurality of messages.

13. The method of claim 11 or 12, wherein the message further comprises a timestamp indicating a time when the electronic device (130, 135, 136, 140) received a sound input corresponding to a pre-defined voice associated with the active participant in the conferencing event.

14. The method of any one of claims 11 to 13, further comprising generating a transcript of the conferencing event by converting a sound input of the conferencing event to a textual output having a plurality of sections.

15. A server (165) comprising:
a processor;
a communication subsystem coupled to the processor; and
a memory coupled to the processor, the memory storing instructions executable by the processor, the instructions being adapted to carry out the method as claimed in any of claims 11 to 15.
